# EUROPÄISCHE PATENTSCHRIFT

(11) **EP 1 287 264 B1**
(45) Veröffentlichungstag und Bekanntmachung des Hinweises auf die Patenterteilung: **20.09.2006**
(21) Anmeldenummer: 01940373.2
(22) Anmeldetag: 27.04.2001
(51) Int. Cl.: F16B 39/30

(54) **HYDRAULISCHES GERÄT**
HYDRAULIC DEVICE
APPAREIL HYDRAULIQUE

(30) Priorität: 12.05.2000 DE 10023388
(43) Veröffentlichungstag der Anmeldung: 05.03.2003
(73) Patentinhaber: Bosch Rexroth AG, 97816 Lohr am Main (DE)
(72) Erfinder: CORDS, Karl, 97846 Partenstein (DE); HOFMANN, Frank, 97816 Lohr am Main (DE); LAUER, Peter, 97816 Lohr am Main (DE); MACHAT, Götz-Dieter, 97816 Lohr (DE); MEYER, Karl, 97794 Rieneck (DE); SCHNEIDER, Konrad, 97778 Fellen (DE); WÖLFGES, Hans, D-97816 Lohr am Main (DE)
(86) Internationale Anmeldenummer: PCT/EP2001/004749
(87) Internationale Veröffentlichungsnummer: WO 2001/086157

(56) Entgegenhaltungen:
- DE-A- 2 156 623
- DE-U- 29 721 155
- US-A- 4 266 590
- US-A- 4 840 526
- US-A- 4 958 973
- US-A- 5 221 113

## Beschreibung

Die Erfindung geht aus von einem hydraulischen Gerät, z.B. von einem hydraulischen Ventil oder einer hydraulischen Pumpe, wobei das hydraulische Gerät ein Mutterteil, z.B. ein Gehäuse oder einen Steuerkolben, mit einem Einschraubloch, das ein Innengewinde mit einem bestimmten Nenndurchmesser und mit einer bestimmten gleichförmigen Steigung hat, und einen Düsenkörper aufweist, der ein Außengewinde mit dem Nenndurchmesser des Einschraublochs und mit einer bestimmten gleichförmigen Steigung hat und der in das Einschraubloch eingeschraubt ist.

Z. B. aus der Zeitschrift "Industrieanzeiger", Ausgabe 83/88 Seiten 24 bis 25, ist es bekannt, ein Schraubenteil in einem Einschraubloch durch Kleben zu sichern. Dazu müssen die Gewinde frei sein von Fett, Schmutz und Feuchte. Bei hydraulischen Geräten ist sehr oft ein Düsenkörper in ein Mutterteil eingeschraubt, der durchaus auch einmal ausgetauscht oder gelöst und wieder eingesetzt werden muß. Bei einem solchen Austausch sind die zur Sicherung des eingesetzten Düsenkörpers notwendigen Maßnahmen recht umfangreich, weil es schwierig ist, die Gewinde frei von Fett zu halten oder von Fett oder Hydrauliköl, das während des Betriebs des hydraulischen Geräts in den Spalt zwischen den Gewinden eingedrungen ist, zu befreien. Nachteilig ist auch, daß beim Einschrauben des Düsenkörpers in das Einschraubloch Kleber wegfließen oder abgeschabt werden kann und in den hydraulischen Kreislauf gelangt, in dem sich das hydraulische Gerät befindet. Dadurch wird die verwendete hydraulische Flüssigkeit verschmutzt. Insbesondere besteht die Gefahr, daß die Düsenbohrung durch aufgebrachten Klebstoff verstopft wird. Insgesamt ist eine Düsenkörpersicherung durch Klebung umständlich, nicht sehr prozeßsicher und unsauber.

Aus den US-Patenten 42 66 590, 28 70 668 oder 19 22 689 bekannt, das Mutterteil einer Schraubenverbindung mit einer anderen Steigung zu versehen, als das Schraubenteil.

In der US 4,840,526 sind große Befestigungsmittel in der Form eines Zugankers, der mit einem Außengewinde versehen ist, und einer Schraubenmutter, die mit einem Innengewinde versehen ist, gezeigt. Die Befestigungsmittel dienen dazu, um andere Teile, zum Beispiel einen Deckel und einen Behälter fest miteinander zu verbinden. Damit die Zugkräfte zwischen dem Zuganker und der Schraubenmutter möglichst gleichmäßig über die gesamte Länge der Gewinde übertragen werden, sind die Gewinde in besonderer Weise ausgebildet. Unter anderem ist die Steigung des einen Gewindes geringfügig größer als die Steigung des anderen Gewindes. Die Befestigungsmittel können auch für hydraulische Ventile verwendet werden.

Die DE 21 56 623 zeigt einen Zylinder, bei dem eine Kolbenstangenführungsbuchse mit einem Außengewinde in einen Zylinderkopf eingeschraubt ist. Die Kolbenstangenführungsbuchse ist wegen der guten Gleiteigenschaften des Materials aus einem thermoplastischen Kunststoff gefertigt. Die beiden Gewinde von Kolbenstangenführungsbuchse und Zylinderkopf haben wegen des hohen. Dehnungskoeffizienten des Kunststoffs ein übergroßes Spiel zueinander. Außerdem haben die beiden Gewinde unterschiedliche Steigungen. Letzteres hat den Zweck, an den beiden Enden der Gewinde die Flanken des Außengewindes beim Einschrauben in das Muttergewinde trotz des übergroßen Gewindespiels fest an die Flanken des Muttergewindes zur provisorischen Zentrierung der Führungsbuchse zum Anlegen zu bringen.

Der Erfindung liegt deshalb die Aufgabe zugrunde, ein hydraulisches Gerät mit den Merkmalen aus dem Oberbegriff des Patentanspruchs 1 so weiterzuentwickeln, daß der Düsenkörper ohne Klebstoff auf einfache Weise im Einschraubloch gesichert ist.

Das angestrebte Ziel wird bei einem hydraulischen Gerät nach dem Oberbegriff des Patentanspruchs 1 erfindungsgemäß dadurch erreicht, daß gemäß dem kennzeichnenden Teil dieses Patentanspruchs 1 zwischen der Steigung des innengewindes des Mutterteils und der Steigung des Außengewindes des Düsenkörpers ein geringfügiger Unterschied besteht. Der Unterschied wird unter Berücksichtigung der nach dem Einschrauben des Düsenkörpers ineinandergreifenden Gewindewindungen so gewählt, daß einzelne Windungen nicht dauerhaft, sondern elastisch verformt werden. Durch diese elastisch verformten Windungen sind Außen- und Innengewinde elastisch gegeneinander verspannt, so daß der Düsenkörper durch die von den elastisch verformten Windungen ausgeübten Kräfte aneinander gesichert ist.

Bei einem hydraulischen Gerät ist diese besondere Art der Schraubenverbindung trotz der großen Unzulänglichkeiten der gängigen Klebeverfahren bisher nicht zur Sicherung eines Düsenkörpers angewandt worden.

Vorteilhafte Ausgestaltungen eines erfindungsgemäßen hydraulischen Geräts kann man den Unteransprüchen entnehmen.

So liegt gemäß Patentanspruch 2 der Unterschied zwischen der Steigung des Mutterteils und der Steigung des Düsenkörpers bevorzugt im Bereich von 5 % bis 10 % eines Mittelwerts zwischen den beiden Steigungen.

Düsen sind bisher vornehmlich aus Messing gefertigt worden, einem Material, in dem auch Bohrungen mit sehr kleinem Durchmesser zwischen 0,5 und 1,5 mm verhältnismäßig leicht gebohrt werden können. Allerdings ist Messing wenig elastisch. Außerdem können, zumal bei den erfindungsgemäßen unterschiedlichen Steigungen zwischen dem Innengewinde und dem Außengewinde die Gewinde gegeneinander verspannt werden, Partikel abgeschabt werden, die in die Hydraulikflüssigkeit gelangen und diese verschmutzen. Deshalb wird in der besonders vorteilhaften Ausgestaltung eines erfindungsgemäßen hydraulischen Geräts gemäß Patentanspruch 3 der Düsenkörper aus einem Stahl, insbesondere aus einem Automatenstahl, gefertigt. Dieser Stahl besitzt eine hohe Elastizität und läßt sich auch noch einigermaßen gut bearbeiten.

Es sind bisher für hydraulische Geräte Düsenkörper verwendet worden, die einen das Außengewinde tragenden Düsenschaft und einen Düsenkopf aufweisen und die bis zur Anlage des Düsenkopfes am Mutterteil in dieses eingeschraubt worden sind. Sind die Gewinde erfindungsgemäß mit unterschiedlichen Steigungen ausgestattet, so werden Gewindewindungen schnell über die Elastizitätsgrenze hinaus plastisch verformt, wenn der Düsenkörper über die Anlage des Düsenkopfes hinaus weitergedreht wird. Dadurch geht die Düsenkörpersicherung verloren. Deshalb ist gemäß Patentanspruch 4 vorgesehen, daß zur Begrenzung der Einschraubbewegung des Düsenkörpers eines der beiden Gewinde einen Auslaufabschnitt hat, in dem die Tiefe der Gewindefurche stetig abnimmt. Sobald das Gegengewinde in den Auslaufabschnitt des einen Gewindes eingreift, steigt das für das Einschrauben notwendige Drehmoment stark an, ohne daß eine dauerhafte Verformung zumindest der außerhalb des Auslaufabschnitts befindlichen Gewindewindungen stattfindet. Um einerseits dem Monteur nicht das Gefühl zu geben, den Düsenkörper so weit einschrauben zu müssen, bis ein Düsenkopf am Mutterteil anliegt, und um andererseits trotzdem den Düsenkörper mit einem größeren Düsenkopf ausstatten zu können, ist gemäß Patentanspruch 6 vorgesehen, daß der Kopf vom Schaft aus über eine bestimmte axiale Länge im Durchmesser zunimmt. Diese Zunahme erfolgt gemäß Patentanspruch 7 vorzugsweise in Form eines Kegelstumpfes.

In der besonders bevorzugten Ausgestaltung gemäß Patentanspruch 8 sind das Innengewinde des Mutterteils und das Außengewinde des Düsenkörpers metrische Gewinde mit einem Durchmesser von 4 mm, ist die Steigung des ersten Gewindes, vorzugsweise die Steigung des Innengewindes, 0,7 mm und unterscheidet sich die Steigung des zweiten Gewindes von der Steigung des ersten Gewindes um 0,05 mm und beträgt die Eingriffslänge zwischen den beiden Gewinden etwa 4 mm. Vorzugsweise ist gemäß Patentanspruch 9 der Düsenkörper an seiner Oberfläche gehärtet und gemäß Patentanspruch 10 mit einer Oxidschutzschicht versehen, die als Rostschutz wirkt.

Ein Ausführungsbeispiel eines als vorgesteuertes Druckbegrenzungsventil ausgebildeten erfindungsgemäßen hydraulischen Geräts ist in den Zeichnungen dargestellt. An Hand der Figuren dieser Zeichnungen wird die Erfindung nun näher erläutert.

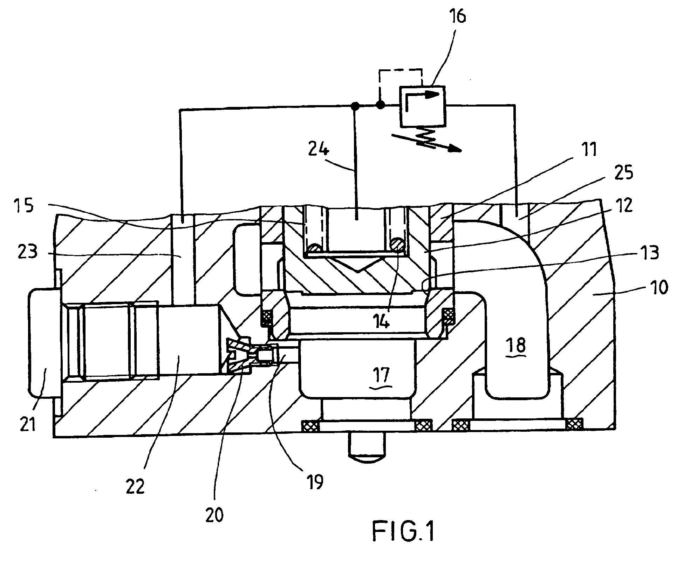

Es zeigen
- Figur 1: einen Ausschnitt aus der Hauptstufe des erfindungsgemäßen Druckbegrenzungsventils, bei dem in das Gehäuse als Mutterteil eine Düse einge schraubt ist,

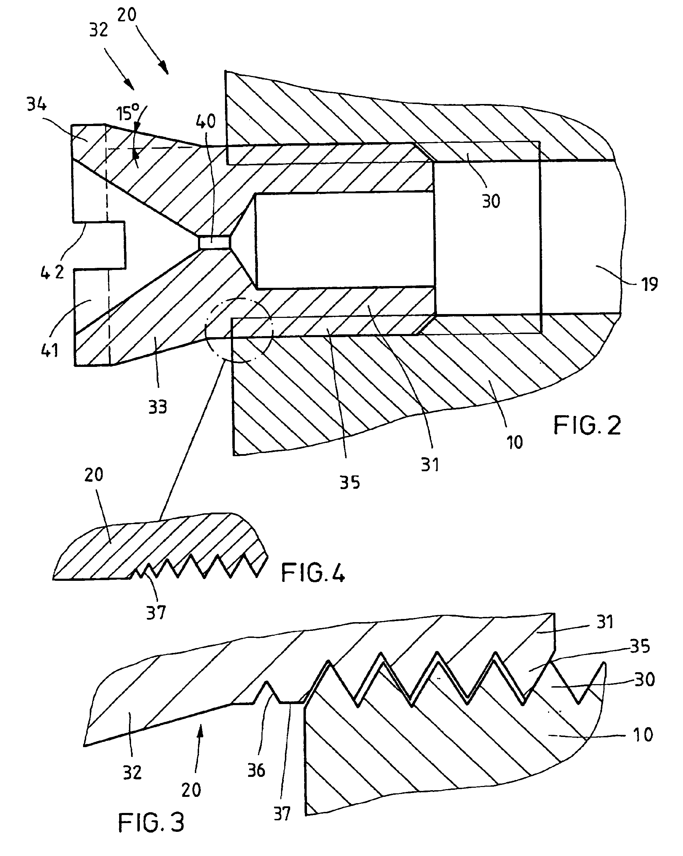

- Figur 2: in vergrößerter Darstellung den Bereich aus Figur 1, in dem sich die Düse befindet,
- Figur 3: einen noch einmal vergrößerten Ausschnitt aus Figur 2, mit einer deutlicheren Darstellung der ineinandergreifenden Gewinde und
- Figur 4: eine Alternative zur aus Figur 3 ersichtlichen Ausbildung des Auslaufabschnitts des Gewindes der Düse.

Bei dem gezeigten Druckbegrenzungsventil nimmt ein Gehäuse 10 aus einem Eisenguß in einer Bohrung eine Hülse 11 fest auf, in der ein Hauptkegel 12 geführt ist und an der ein Sitz 13 für den Hauptkegel ausgebildet ist. Der Hauptkegel 12 wird von einer relativ schwachen Druckfeder 14, die sich in einem rückwärtigen mit Steueröl gefüllten Steuerraum 15 befindet, in Richtung auf den Ventilsitz 13 beaufschlagt. Auf dem Gehäuse 10 sitzt das nicht näher dargestellte Gehäuse des nur in seinem Schaltbild gezeigten Pilotventils 16. Soweit das Druckbegrenzungsventil in seinen konstruktiven Einzelheiten nicht näher dargestellt ist, kann es dem Datenblatt RD 25 802/01.99 der Anmelderin entnommen werden.

Der zu begrenzende Druck steht in einem Eingangskanal 17 des Gehäuses 10 und an der diesem zugewandten Stirnseite des Hauptkegels 12 an. Wenn dieser vom Sitz 13 abhebt, kann Druckflüssigkeit vom Eingangskanal 17 durch die stirnseitige Öffnung sowie durch Radialbohrungen der Hülse 11 in einen Ausgangskanal 18 des Gehäuses 10 und von dort zu einem Tank abfließen.

Im Gehäuse 10 verlaufen noch Kanäle, die Teil eines Steuerölströmungspfades sind. Im Zulauf zum Pilotventil 16 liegt eine radial vom Eingangskanal 17 abgehende Steuerbohrung 19, in die eine Steueröldüse 20 eingeschraubt ist und die exzentrisch in eine größere nach außen durch einen Stopfen 21 verschlossene Querbohrung 22 übergeht. Von der wiederum führt eine parallel zur Achse der Hülse 11 verlaufende Bohrung 23 zum Eingang des Pilotventils 16. An diesen Eingang ist über eine Leitung 24 auch der Steuerraum 15 angeschlossen. Vom Ausgang des Pilotventils führt eine Leitung, in der auch eine parallel zur Hülse 11 verlaufende Bohrung 25 des Gehäuses 10 gehört, in dessen Ausgang 18.

Somit steht, wenn das Pilotventil 16 geschlossen ist, über die Steueröldüse 20 im Steuerraum 15 hinter dem Hauptkegel 12 derselbe Druck wie im Eingang 17 an.

Die Feder 14 hält deshalb den Hauptkegel 12 geschlossen. Steigt der Druck im Eingang 17 auf den am Pilotventil 16 eingestellten Wert an, so öffnet dieses und es kann Steueröl aus dem Steuerraum 15 über das Pilotventil 16 in den Ausgang 18 abfließen. Der Druck im Eingang 17 steigt noch geringfügig um das Druckäquvalent zur Druckfeder 14 an und wird dann durch einen entsprechenden Öffnungsquerschnitt zwischen der Hülse 11 und dem Hauptkegel 12 auf diesem Wert gehalten. Über die Steueröldüse 20 fließt ein Steuerölstrom, der durch den Öffnungsquerschnitt der Düse und das im Bereich von wenigen bar liegende Druckäquivalent der Druckfeder 14 bestimmt ist.

Die Düse 20 ist in die Bohrung 19 eingeschraubt. Diese Bohrung ist dazu von der größeren Querbohrung 22 her über eine gewissen Strecke mit einem metrischen Innengewinde versehen, das einen Nenndurchmesser von 4 mm und eine Steigung von 0,70 mm hat. In Kurzform sagt der Fachmann: Das Innengewinde ist ein Gewinde M4 x 0,70.

Die Düse oder genauer ausgedrückt, der Düsenkörper 20 besitzt einen Schraubenschaft 31 und einen Schraubenkopf 32, dessen Durchmesser vom Schraubenschaft beginnend nach Art eines Kegelstumpfes mit einem Öffnungswinkel von 30 Grad zunächst linear zunimmt und dann noch über eine kurze Strecke konstant bleibt. Am Schraubenkopf 32 kann man also einen kegelstumpfförmigen Abschnitt 33 und einen kreiszylindrischen Abschnitt 34 voneinander unterscheiden. Am Schraubenschaft trägt der Düsenkörper 20 ein Außengewinde 35, das wie das Innengewinde 30 ein M4-Gewinde ist, dessen Steigung jedoch nicht 0,70 mm, sondern 0,75 mm beträgt, also geringfügig größer als die Steigung des Innengewindes 30 ist. Schraubenschaft und Schraubenkopf gehen, wie man deutlich sieht, ohne dazwischenliegenden Einstich ineinander über. Dementsprechend läuft das Gewinde 35 auch nicht in einem Einstich aus. Vielmehr wird in einer geringen Entfernung zum Kopf 32 die Gewindefurche allmählich weniger tief und läuft schließlich noch im Schaft 31 ganz aus. Dies wird dadurch erreicht, daß beim Schneiden des Gewindes das Schneidwerkzeug bei weiterem Drehen und weiterer axialer Bewegung des Düsenkörpers radial zurückgezogen wird. In Figur 3 ist ersichtlich, wie die Gewindefurche 36 nahe am Kopf 32 flacher geworden ist. Ist während des Herausziehens des Schneidwerkzeugs die Geschwindigkeit der axialen Bewegung des Düsenkörpers die gleiche wie beim Schneiden des Gewindes vor dem Auslaufabschnitt, so besteht auch im Auslauf der gleiche Abstand zwischen den Gewindewindungen wie im regulären Teil des Gewindes. Der Gewindekamm ist im Auslauf dann nicht spitz, sondern flach, wie dies aus Figur 3 bei 37 erkennbar ist.

Es ist auch möglich, beim Schneiden des Gewindes im Auslaufabschnitt die Geschwindigkeit für die axiale Bewegung des Düsenkörpers 20 zu verringern. Dann bleibt, wie dies aus Figur 4 ersichtlich ist, der Gewindekamm 37 spitz, im Auslaufabschnitt ist jedoch der axiale Abstand zwischen zwei Gewindewindungen verringert.

Der Unterschied zwischen der Steigung des Innengewindes 30 und des Außengewindes 35 bringt es mit sich, daß beim Einschrauben des Düsenkörpers 20, der als Schraubenteil bezeichnet sein möge, in die Bohrung 19, die als Einschraubloch bezeichnet sein möge, nur die vorderste Gewindewindung an einer Stelle an einer Windung des Innengewindes anliegt, wenn während des Eindrehens ein gewisser Druck auf den Düsenkörper 20 ausgeübt wird. Ohne diesen Druck liegt die hinterste mit dem Innengewinde 30 in Eingriff stehende Gewindewindung des Düsenkörpers 20 an einer Stelle am Innengewinde 30 an. Ist der Düsenkörper 20 weit genug in die Bohrung 19 eingeschraubt, so stößt eine weitere Gewindewindung - allerdings mit der entgegengesetzten Flanke - gegen eine Flanke des Innengewindes 30. Dieser Zustand ist in Figur 3 dargestellt. Man sieht, daß die am weitesten eingeschraubte Gewindewindung des Düsenkörpers 20 mit der nach innen zeigenden Flanke und die letzte in Eingriff stehende Windung des Düsenkörpers 20 mit der nach außen zeigenden Flanke an entsprechenden Windungen des Innengewindes 30 anliegt. Wird nun der Düsenkörper 20 weiterverdreht, so werden die aneinander anliegenden Windungen elastisch verformt und der Düsenkörper 20 und das Gehäuse 10 miteinander verspannt, wobei weitere Gewindewindungen in Anlage aneinander kommen können. Bei den gegebenen Gewindemaßen und Steigungen geschieht das bei einer Gewindelänge von etwa 4 mm. Sobald die Situation nach Figur 3 besteht oder kurz zuvor oder kurz danach gelangt das Innengewinde 30 in den Auslaufabschnitt des Außengewindes 35, so daß beim weiteren Verdrehen des Düsenkörpers 20 das notwendige Drehmoment stark ansteigt und die Verdrehung des Düsenkörpers bewußt beendet wird, noch ehe reguläre ineinandergreifende Gewindewindungen über die Elastizitätsgrenzen der Materialien hinaus dauerhaft verformt sind. Im Auslauf findet eine gewisse dauerhafte Verformung der Gewindewindungen statt, die zusätzlich zur Sicherung des Schraubenteils im Einschraubloch beiträgt.

Die besondere Form des Kopfes 32, dessen größerer Durchmesser notwendig ist, um an die eigentliche Düsenbohrung 40 eine das Strömungsverhalten des Steueröls beeinflussende kegelige Erweiterung 41 anschließen und den Schlitz 42 einbringen zu können, läßt jedenfalls beim Monteur nicht das Gefühl aufkommen, den Düsenkörper 20 bis zu einem axialen Anschlag einschrauben und dann noch mit einem hohen Drehmoment anziehen zu müssen, was die Gefahr einer dauerhaften Verformung der Gewindewindungen mit sich bringen würde.

Der Düsenkörper 20 ist aus einem Automatenstahl gefertigt, der gute elastische Eigenschaften hat und sich trotzdem noch gut bearbeiten läßt, um insbesondere die sehr kleine Düsenbohrung 40 bohren zu können. An seiner Oberfläche ist der Düsenkörper 20 insbesondere durch Karbonitrieren gehärtet, so daß die Gefahr gering ist, daß beim Einschrauben von den Gewindewindungen Teilchen abgeschabt werden, die in den hydraulischen Kreislauf gelangen könnten. Außerdem ist der Düsenkörper 20 an seiner Oberfläche mit einer Oxidschutzschicht versehen.

## Patentansprüche

1. Hydraulisches Gerät mit einem Mutterteil (10) mit einem Einschraubloch (19), das ein Innengewinde (30) mit einem bestimmten Nenndurchmesser und mit einer bestimmten gleichförmigen Steigung aufweist, und mit einem Düsenkörper (20), der ein Außengewinde (35) mit dem Nenndurchmesser des Einschraublochs (19) und mit einer bestimmten gleichförmigen Steigung aufweist und der in das Einschraubloch (19) eingeschraubt ist,
**dadurch gekennzeichnet, daß** zwischen der Steigung des Innengewindes (30) des Mutterteils (10) und der Steigung des Außengewindes (35) des Düsenkörpers (20) ein geringfügiger Unterschied besteht.

2. Hydraulisches Gerät nach Anspruch 1, **dadurch gekennzeichnet, daß** der Unterschied zwischen der Steigung des Mutterteils (10) und der Steigung des Düsenkörpers (20) im Bereich von 5% bis 10% eines Mittelwertes zwischen den beiden Steigungen liegt.

3. Hydraulisches Gerät nach einem vorhergehenden Anspruch, **dadurch gekennzeichnet, daß** der Düsenkörper (20) aus einem Stahl, insbesondere aus einem Automatenstahl, gefertigt ist.

4. Hydraulisches Gerät nach einem vorhergehenden Anspruch, **dadurch gekennzeichnet, daß** zur Begrenzung der Einschraubbewegung des Düsenkörpers (20) eines der beiden Gewinde (30, 35) einen Auslaufabschnitt hat, in dem die Tiefe der Gewindefurche (36) stetig abnimmt.

5. Hydraulisches Gerät nach Anspruch 4, **dadurch gekennzeichnet, daß** das Außengewinde (35) des Düsenkörpers (20) den Auslaufabschnitt aufweist.

6. Hydraulisches Gerät nach Anspruch 4 oder 5, **dadurch gekennzeichnet, daß** der Düsenkörper (20) einen das Außengewinde (35) tragenden Schaft (31) und einen Kopf (32) aufweist, in dem der Durchmesser größer als im Schaft (31) ist, und daß der Kopf (32) vom Schaft (31) aus über eine bestimmte axiale Länge im Durchmesser zunimmt.

7. Hydraulisches Gerät nach Anspruch 6, **dadurch gekennzeichnet, daß** der Durchmesser unter Bildung eines Kegelstumpfes (33) linear zunimmt und daß der Öffnungswinkel des Kegelstumpfes (33) im Bereich von 30 Grad liegt.

8. Hydraulisches Gerät nach einem vorhergehenden Anspruch, **dadurch gekennzeichnet, daß** das Innengewinde (30) des Mutterteils (10) und das Außengewinde (35) des Düsenkörpers (20) metrische Gewinde mit einem Durchmesser von 4 mm sind, daß die Steigung des ersten Gewindes, vorzugsweise die Steigung des Innengewindes (30), 0,7 mm ist und sich die Steigung des zweiten Gewindes, vorzugsweise die Steigung des Außengewindes (35), von der Steigung des ersten Gewindes um 0,05 mm unterscheidet und daß die durch das kürzere Gewinde (35) der beiden Gewinde bestimmte Eingriffslänge zwischen den beiden Gewinden (30, 35) etwa 4 mm beträgt.

9. Hydraulisches Gerät nach einem vorhergehenden Anspruch, **dadurch gekennzeichnet, daß** der Düsenkörper (20) an seiner Oberfläche insbesondere durch Karbonitrieren gehärtet ist.

10. Hydraulisches Gerät nach einem vorhergehenden Anspruch, **dadurch gekennzeichnet, daß** der Düsenkörper (20) an seiner Oberfläche mit einer Oxidschutzschicht versehen ist.

## Claims

1. A hydraulic device having a nut part (10) with a threaded hole (19) which has an internal screw thread (30) with a defined nominal diameter and with a defined, uniform pitch, and having a nozzle element (20) which has an external screw thread (35) with the same nominal diameter as the threaded hole (19) and with a defined, uniform pitch, which is screwed into the threaded hole (19), **characterized by** the fact that there is a slight difference between the pitch of the internal screw thread (30) of the nut part (10) and the pitch of the external screw thread (35) of the nozzle element (20).

2. A hydraulic devices according to claim 1, **characterized by** the fact that the difference between the pitch of the nut part (10) and the pitch of the nozzle element (20) is in the range from 5% to 10% of a mean formed from the two pitches.

3. A hydraulic devices according to any of the preceding claims, **characterized by** the fact that the nozzle element (20) is made of a steel, in particular of a free-machining steel.

4. A hydraulic devices according to any of the preceding claims, **characterized by** the fact that, to limit the screwing-in movement of the nozzle element (20), one of the two screw threads (30, 35) has a run-out section in which the depth of the thread groove (36) decreases continuously.

5. A hydraulic devices according to claim 4, **characterized by** the fact that the external screw thread (35) of the nozzle element (20) has the run-out section.

6. A hydraulic devices according to claim 4 or 5, **characterized by** the fact that the nozzle element (20) has a shank (31) which bears the external screw thread (35) and a head (32) whose diameter is greater than that of the shank (31), and by the fact that the head (32), starting from the shank (31), has a diameter which increases over a defined axial length.

7. A hydraulic devices according to claim 6, **characterized by** the fact that the diameter increases linearly to form a truncated cone (33), and by the fact that the included angle of the truncated cone (33) is in the region of 30 degrees.

8. A hydraulic devices according to any of the preceding claims, **characterized by** the fact that the internal screw thread (30) of the nut part (10) and the external screw thread (35) of the nozzle element (20) are metric screw threads with a diameter of 4 mm, by the fact that the pitch of the first thread, preferably the pitch of the internal screw thread (30), is 0.7 mm, and the pitch of the second screw thread, preferably the pitch of the external screw thread (35), differs by 0.05 mm from the pitch of the first thread, and by the fact that the engagement length between the two threads (30, 35), which is determined by the shorter (35) of the two screw threads, is approximately 4 mm.

9. A hydraulic devices according to any of the preceding claims, **characterized by** the fact that the nozzle element (20) is hardened on its surface, in particular by carbonitriding.

10. A hydraulic devices according to any of the preceding claims, **characterized by** the fact that the nozzle element (20) is provided with an oxidation-resistant layer on its surface.

## Revendications

1. Un appareil hydraulique doté d'une partie (10) écrou, dotée d'un trou (19) de vissage présentant un filetage (30) intérieur de diamètre nominal déterminé et d'un pas de filetage déterminé uniforme, et doté d'un corps (20) de gicleur, qui présente un filetage (35) extérieur du diamètre nominal du trou (19) de vissage et d'un pas de filetage déterminé uniforme et qui est vissé dans le trou (19) de vissage,
**caractérisé en ce qu'**entre le pas de filetage du filetage (30) intérieur de la partie (10) écrou et le pas de filetage du filetage (35) extérieur du corps (20) de gicleur règne une légère différence.

2. Un appareil hydraulique selon la revendication n° 1, **caractérisé en ce que** la différence entre le pas de filetage de la partie (10) écrou et le pas de filetage du corps (20) de gicleur est située dans une plage de 5% à 10% d'une valeur moyenne entre les deux pas de filetage.

3. Un appareil hydraulique selon une revendication précédente, **caractérisé en ce que** le corps (20) de gicleur est fabriqué en acier, en particulier en acier de décolletage.

4. Un appareil hydraulique selon une revendication précédente, **caractérisé en ce que**, afin de limiter le mouvement de vissage du corps (20) de gicleur, un des deux filetages (30, 35) présente un segment de fin de filetage, où la profondeur du sillon (36) de filetage décroît de façon continue.

5. Un appareil hydraulique selon la revendication n° 4, **caractérisé en ce que** le filetage (35) extérieur du corps (20) de gicleur présente un segment de fin de filetage.

6. Un appareil hydraulique selon la revendication n° 4 ou n° 5, **caractérisé en ce que** le corps (20) de gicleur présente une tige (31) portant le filetage (35) extérieur et une tête (32), dont le diamètre est supérieur à celui de la tige (31), et que le diamètre de la tête (32) croît à partir de la tige (31) sur une longueur axiale déterminée.

7. Un appareil hydraulique selon la revendication n° 6, **caractérisé en ce que** le diamètre croît de façon linéaire en formant un cône (33) tronqué et que l'angle d'ouverture du cône (33) tronqué a pour ordre de grandeur 30 degrés.

8. Un appareil hydraulique selon une revendication précédente, **caractérisé en ce que** le filetage (30) intérieur de la partie (10) écrou et le filetage (35) extérieur du corps (20) de gicleur sont des filetages métriques de diamètre 4 mm, que le pas de filetage du premier filetage, de préférence le pas de filetage du filetage (30) intérieur, est de 0,7 mm et le pas de filetage du second filetage, de préférence le pas de filetage du filetage (35) extérieur, diffère de 0,05 mm du pas de filetage du premier filetage et que la longueur de prise entre les deux filetages (30, 35), déterminée par le filetage (35) le plus court des deux filetages, est de 4 mm environ.

9. Un appareil hydraulique selon une revendication précédente, **caractérisé en ce que** le corps (20) de gicleur est trempé au niveau de sa face supérieure, en particulier par carbonitruration.

10. Un appareil hydraulique selon une revendication précédente, **caractérisé en ce que** le corps (20) de gicleur est doté d'une couche d'oxyde de protection au niveau de sa face supérieure.
